# FASCICULE DE BREVET EUROPEEN

(11) **EP 3 160 786 B1**
(45) Date de publication et mention de la délivrance du brevet: **23.03.2022**
(21) Numéro de dépôt: 15731641.5
(22) Date de dépôt: 21.05.2015
(51) Int. Cl.: B60K 6/48, B60K 6/442, B60K 6/547, F16H 3/091

(54) **TRANSMISSION HYBRIDE A MACHINE ÉLECTRIQUE DÉPORTÉE ET PROCÉDÉ DE COMMANDE DE CHANGEMENTS DE RAPPORTS**
HYBRIDGETRIEBE MIT VERSETZTER ELEKTRISCHER MASCHINE UND VERFAHREN ZUR GANGSCHALTUNGSSTEUERUNG
HYBRID TRANSMISSION WITH OFFSET ELECTRIC MACHINE AND METHOD FOR CONTROLLING GEAR CHANGES

(30) Priorité: 24.06.2014 FR 1455850
(43) Date de publication de la demande: 03.05.2017
(73) Titulaire: Renault s.a.s, 92100 Boulogne Billancourt (FR); Nissan Motor Co., Ltd., Kanagawa 220-8623 (JP)
(72) Inventeur: FREMAU, Nicolas, 78470 Saint Remy Les Chevreuse (FR); VILLENEUVE, Arnaud, 78540 Vernouillet (FR); KETFI-CHERIF, Ahmed, 78990 Elancourt (FR); VIGNON, Antoine, 91430 Igny (FR)
(74) Mandataire: Renault Group
(86) Numéro de dépôt international: PCT/FR2015/051347
(87) Numéro de publication internationale: WO 2015/197927

(56) Documents cités:
- EP-A1- 2 368 739
- WO-A1-2013/060955
- DE-A1-102011 077 594
- DE-A1-102011 089 710
- FR-A- 1 339 113

## Description

La présente invention se rapporte au domaine des transmissions hybrides pour véhicules automobiles, comportant d'une part un moteur thermique d'entraînement, et d'autre part une machine électrique.

Plus précisément, elle a pour objet une transmission hybride pour véhicule automobile selon la revendication 1, muni d'un moteur thermique et d'une machine électrique d'entraînement, comprenant un arbre primaire plein et un arbre primaire creux concentriques, reliés au vilebrequin du moteur thermique et à la machine électrique sans embrayage de coupure, un arbre secondaire relié aux roues du véhicule par un différentiel, et un arbre de transfert de mouvement d'un arbre primaire sur l'arbre secondaire et de couplage des arbres primaires.

L'invention a également pour objet un procédé de commande de changements de rapports selon la revendication 17, sur une telle transmission, à l'aide d'un dispositif de couplage à trois positions sur un arbre primaire, d'un dispositif de couplage à trois positions sur son secondaire, et d'un dispositif de couplage à trois positions sur l'arbre de transfert.

Les transmissions hybrides ont pour intérêt principal de faire bénéficier la chaîne cinématique d'entraînement d'un véhicule, de deux sources d'énergies, thermique et électrique, dont les apports de couple peuvent se cumuler dans un mode dit hybride, ou être utilisées séparément, soit dans un « mode thermique pur » où la machine électrique ne fournit pas de couple à la chaîne de traction, soit dans un mode « électrique pur », où le moteur thermique ne fournit pas de couple à la chaîne de traction. D'autres fonctionnalités sont également requises, telles que la possibilité de lancer le moteur thermique à l'arrêt ou en roulage, en utilisant la machine électrique comme démarreur, ou celle d'utiliser la machine électrique en générateur de courant, pour charger les batteries.

Par la publication WO 2013/060955, on connaît une transmission hybride offrant l'ensemble de ces prestations, grâce à une architecture comportant deux arbres primaires concentriques reliés respectivement au moteur thermique et à la machine électrique, un premier arbre secondaire relié aux roues du véhicule et un deuxième arbre secondaire renvoyant le mouvement d'un arbre primaire sur le différentiel. Le couplage des arbres primaires est assuré par un organe pouvant occuper trois positions, dans lesquelles :
- le moteur thermique est découplé de la chaîne cinématique reliant la machine électrique aux roues, ou couplé à celle-ci par l'intermédiaire du deuxième arbre secondaire,
- l'arbre primaire relié au moteur thermique, est couplé au premier arbre secondaire, ou à l'arbre primaire relié à la machine électrique, et
- l'arbre primaire relié au moteur thermique, est couplé à l'arbre primaire relié à la machine électrique, de manière à additionner leurs couples.

Cette transmission dispose de quatre rapports thermiques ou hybrides et de deux rapports électriques. Elle présente certains inconvénients, liés en premier lieu à ses dimensions. La longueur totale de la transmission est imposée par l'alignement de quatre dentures, de deux groupes crabots et d'un pignon d'attaque. Cet empilement est trop long pour certains petits véhicules. Son encombrement transversal, ou « masque », vu de l'axe du vilebrequin), impose un porte-à-faux avant trop important pour de nombreuses applications.

Par ailleurs, deux des quatre rapports thermiques (rapports de 2^{ème} et 4^{éme}) sont indépendants des rapports électriques, mais le choix de l'un d'eux (rapport 3^{ème}) est forcément associé au choix d'un rapport électrique.

La présente invention vise à réaliser une transmission hybride plus compacte que la précédente dans ses deux dimensions, tout en disposant d'une plus grande flexibilité sur l'usage du moteur thermique et de la machine électrique, grâce à l'indépendance de leurs démultiplications.

Dans ce but, l'invention prévoit que :
- la machine électrique soit disposée à l'extrémité opposée de la ligne primaire par rapport au moteur thermique, et
- un premier arbre primaire porte une denture fixe assurant le passage permanent du mouvement sur l'arbre de transfert, et deux pignons fous de rapports thermiques ou hybrides engrenant avec des dentures fixes de l'arbre secondaire. Selon l'invention,
l'arbre secondaire porte un pignon d'attaque de différentiel pour assurer la descente du mouvement sur le différentiel direction des roues du véhicule.

De préférence, la transmission ne présente qu'un seul pignon d'attaque de différentiel, porté par l'arbre secondaire.

Dans un mode de réalisation particulier, la transmission comprend une deuxième machine électrique, couplée à l'arbre de transfert.

Les trois dispositifs de couplage de la transmission peuvent être commandés par un groupe de passage électrique à trois positions, et un groupe fonctionnel de passage thermique à cinq positions.

D'autres caractéristiques et avantages de l'invention apparaîtront clairement à la lecture de la description suivante d'un mode de réalisation non limitatif de celle-ci, en se reportant aux dessins annexés, sur lesquels :
- la figure 1 illustre un premier mode de réalisation de l'invention,
- la figure 2 illustre un deuxième mode de réalisation de l'invention,
- la figure 3 est un tableau de fonctionnement correspondant au premier mode de réalisation,
- la figure 4 est un tableau de fonctionnement correspondant au deuxième mode de réalisation,
- les figures 5 à 7 illustrent trois exemples de séquences d'accélération,
- les figures 8A et 8B illustrent un mode de fonctionnement hybride série, avec les deux machines électriques,
- la figure 9 illustre un changement de rapports électriques sous couple avec les deux machines électriques,
- les figures 10, 11A et 11B illustrent la déconnection de la deuxième machine électrique,
- les figures 12 et 13 montrent deux possibilités d'implantation de la fonction parking,
- la figure 14 est une alternative à la figure 2 sur l'entraînement de la transmission par la deuxième machine électrique, et
- les figures 15A et 1B mettent en évidence la réduction du masque de la transmission obtenue par l'invention.

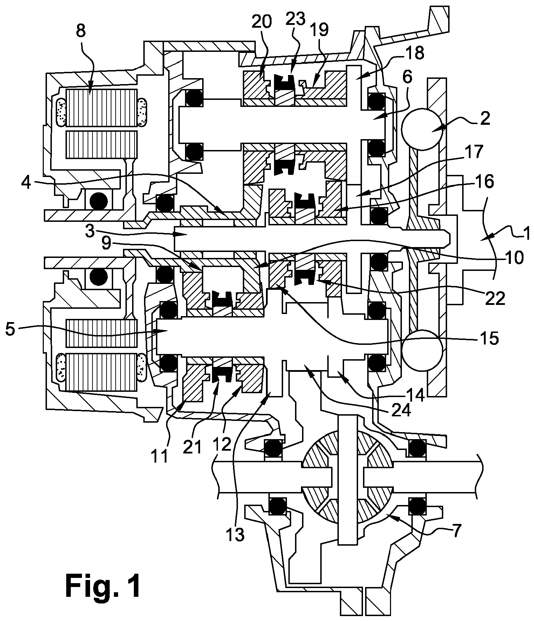

La transmission hybride de la figure 1 pour véhicule automobile muni d'un moteur thermique et d'une machine électrique d'entraînement 8, comprend deux arbres primaires 3, 4 concentriques, reliés au vilebrequin 1 du moteur thermique *Ice* (non représenté) et à la machine électrique 8, sans embrayage de coupure. Elle comprend un arbre secondaire 5 relié aux roues du véhicule par un différentiel 7, et un arbre de transfert 6 de mouvement d'un arbre primaire 3 sur l'arbre secondaire 5, et de couplage des arbres primaires. L'arbre primaire plein 3 est connecté directement par l'intermédiaire d'un système de filtration 2 (moyeu amortisseur, « damper », double volant ou autre), au nez du vilebrequin 1 du moteur thermique (*Ice*)*.* L'arbre primaire creux 4 est relié à la machine électrique 8, disposée à l'extrémité opposée de la ligne primaire 3, 4 par rapport au moteur thermique. L'arbre secondaire 5 porte un pignon d'attaque 24 du différentiel 7. L'arbre de transfert 6 est lié en permanence à l'arbre primaire plein 3. Il renvoie le mouvement du primaire sur l'arbre secondaire sur certains rapports de transmission, mais n'attaque pas directement le différentiel. La transmission ne dispose que d'un seul pignon d'attaque de différentiel 24, porté par l'arbre secondaire 5, pour assurer la descente du mouvement en direction des roues du véhicule. L'arbre primaire creux 4 porte deux pignons fixes électriques 9, 10 de rapports électriques A et B, engrenant avec deux pignons fous électriques 11, 12 de l'arbre secondaire 5. Ce dernier porte également deux dentures fixes 13, 14 de rapports thermiques (ou hybrides) **Ic2,** et **Ic3** ou ***Ic4, Ic2 EvA,*** et ***Ic3 EvA*** ou ***Ic4 EvA, Ic2 EvB,*** et ***Ic3 EvB*** ou ***Ic4 EvB.*** Les pignons fous 15, 16 des rapports de rang 2 et 4 sont portés par l'arbre primaire plein 3, qui porte également un pignon fixe de couplage primaire 17 engrenant avec un pignon fixe de couplage 18 de l'arbre de transfert 6. Le pignon fou 19 du rapport 3 est porté par l'arbre de transfert 6, de même que le pignon fou de couplage des arbres primaires 20, sur le rapport 1.

La transmission comprend trois dispositifs de couplage 21, 22, 23. Le premier dispositif de couplage 21, ou dispositif de couplage électrique, est porté par l'arbre secondaire 5. Il permet d'engager les deux rapports électriques A, B. Le deuxième dispositif de couplage 22 est porté par l'arbre primaire plein 3. Il permet d'engager les rapports thermiques 2 et 4. Le rapport 3, et le couplage des arbres primaires (rapports 1, 5 et charge de la batterie), sont assurés par le troisième dispositif de couplage 23, porté par l'arbre de transfert 6.

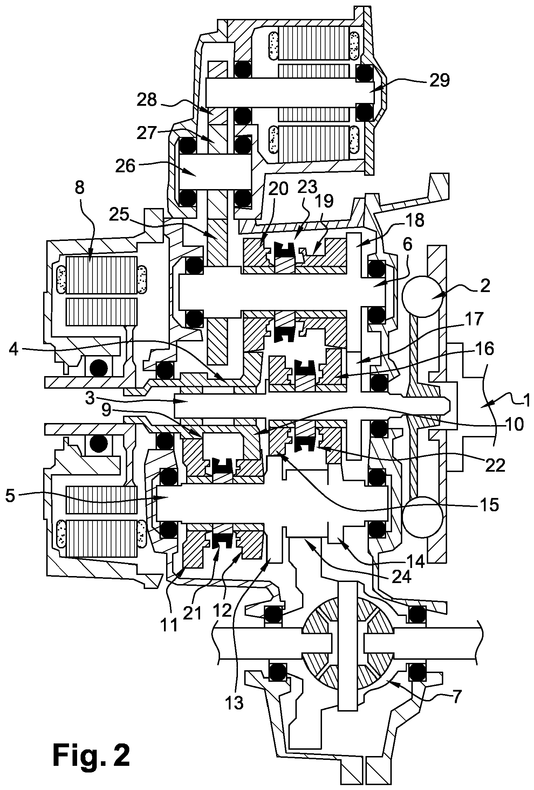

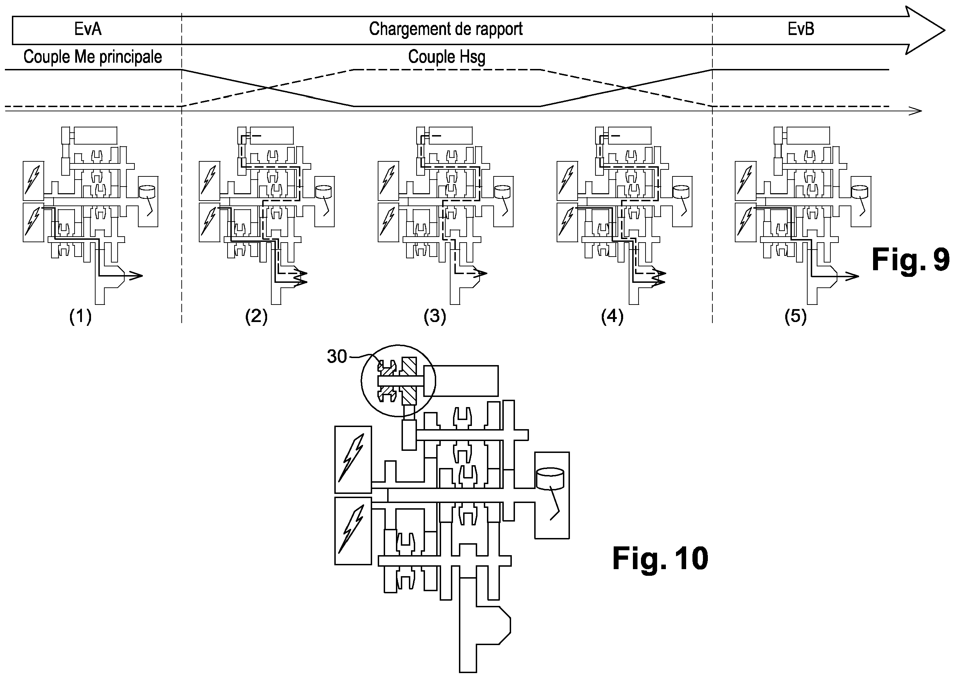

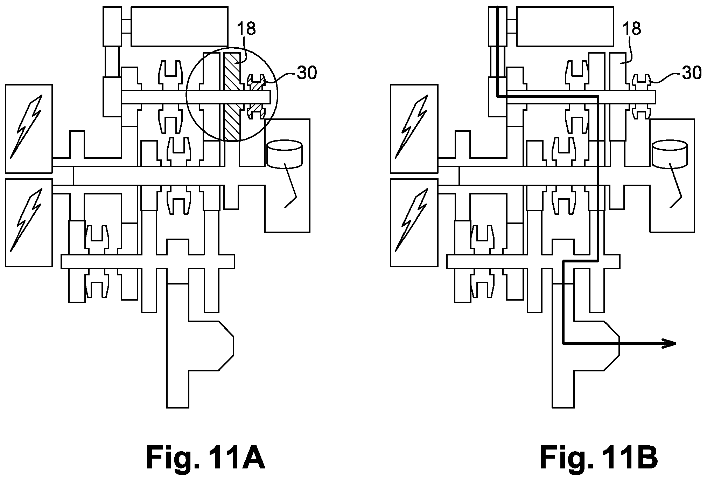

Dans le mode de réalisation illustré par la figure 2, on retrouve les mêmes éléments, dans la même disposition. La transmission comprend en plus une deuxième machine électrique 29, couplée à l'arbre de transfert 6 par un pignon d'attaque 28, entraînant par un pignon 26, fixé sur un arbre de renvoi 27, un pignon fixe d'entrée 25 de la deuxième machine électrique 29 sur l'arbre de transfert. Un dispositif de couplage supplémentaire 30, non représenté sur la figure 2, mais présent sur les figures 10, 11A, 11B, peut être ajouté ou non. Il permet de connecter ou de déconnecter la deuxième machine électrique 29, de la transmission.

Dans les deux modes décrits, la transmission présente un engrenage triple 16, 19, 14 entre un pignon fou 19 de l'arbre de transfert 6 un pignon fou 16 d'un arbre primaire 3, et une denture fixe 14 de l'arbre secondaire 5.

Les moyens de couplage 21, 22, 23 peuvent être de tout type : crabot, synchroniseur, embrayage humide ou autres. La machine électrique peut aussi être de tout type : machine à aimants, asynchrone, à réluctance, dans tout type de disposition radiale (rotor intérieur ou rotor extérieur) ou axiale, avec un refroidissement par eau, air ou huile. Le volant amortisseur 2 peut aussi être de tout type, et on peut utiliser notamment une filtration à grands ressorts courbes, mono-pente ou bi-pente. Comme la première, la deuxième machine électrique 29 peut être de tout type. Elle peut être montée sur la transmission dans une disposition de type « *add on* », la machine et sa descente constituant dans ce cas un ensemble rapporté sur le carter de la transmission, ou intégré à l'intérieur de celle -ci, de type *« add in ».*

Dans les deux modes décrits :
- le premier arbre primaire 3 porte une denture fixe 17, assurant le passage permanent du mouvement sur l'arbre de transfert 6, et deux pignons fous 15, 16 de rapports thermiques ou hybrides engrenant avec des dentures fixes 13, 14 de l'arbre secondaire 5,
- le deuxième arbre primaire 4 porte deux dentures fixes 9, 10 de rapports électriques A et B, engrenant avec deux pignons fous 11, 12 de l'arbre secondaire 5,
- l'arbre secondaire 5 porte les deux pignons fous 11 et 12 des rapports électriques A et B, deux pignons fixes 13, 14 de rapports 2, 3 et 4 et le pignon d'attaque de différentiel 24,
- l'arbre de transfert 6 porte une denture fixe 18 engrenant avec une denture fixe 17 du premier arbre primaire 3, et deux pignons fous 19, 20, engrenant respectivement avec un pignon fou 16 du premier arbre primaire 3 et une denture fixe 10 du deuxième arbre primaire 4.

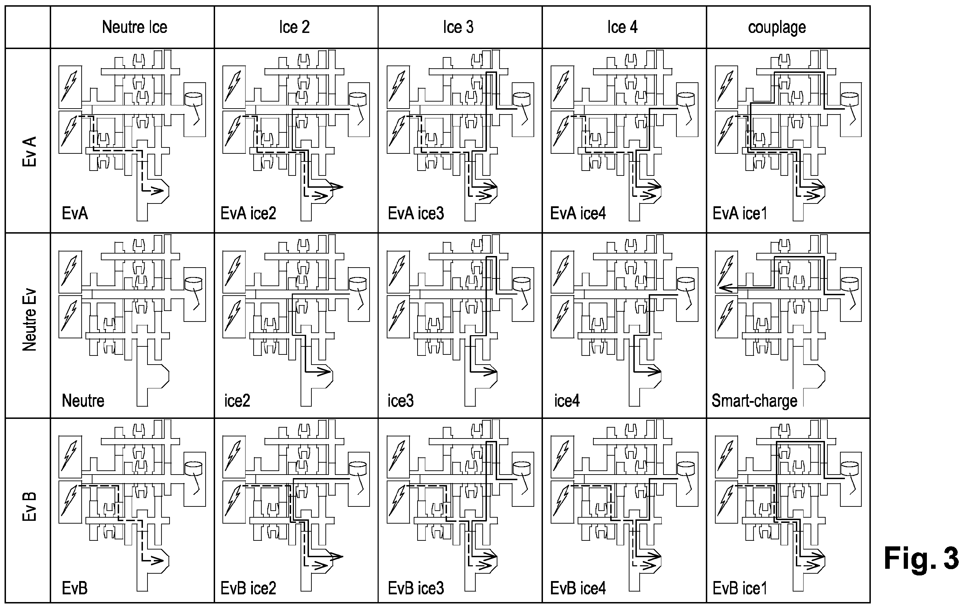

Chacun des trois dispositifs de couplage dispose de trois positions, dont différentes combinaisons sont présentées sur la figure 3 :
- ***Neutre Ice,*** pour le découplage du moteur thermique, avec la machine électrique à l'arrêt ***(Neutre** Ev),* ou fournissant du couple aux roues sur les rapports électriques A ou B (***EvA*** ou ***EvB),***
- ***Ice2, Ice EvA, Ice2 EvB*** pour le deuxième rapport thermique, seul, ou avec un couple électrique fourni sur le rapport A ou B,
- ***Ice3, Ice3 EvA, Ice3, EvB*** pour le troisième rapport thermique, seul, ou avec un couple électrique fourni sur le rapport A ou B,
- ***Ice 4, Ice 4 EvA, Ice 4 EvB*** pour le quatrième rapport thermique, seul, ou avec un couple électrique fourni sur le rapport A ou B,
- ***EvA Ice1, Smart-charge, EvB Ice5,*** pour le couplage des arbres primaires par l'arbre de transfert sur le premier rapport thermique, en mode recharge, sur un cinquième rapport thermique.

On retrouve les trois positions du dispositif de couplage 22 de l'arbre primaire plein 3 :
- une position dans laquelle l'arbre primaire 3 relié au moteur thermique est découplé de la chaîne cinématique reliant la machine électrique 8 aux roues **(*Neutre Ice*** et ***Ic3***)*,* ou couplé à celle-ci par l'arbre transfert 6 (***couplage***)*,* ou couplé à la machine électrique 8 colonne *couplage*)*,* et
- deux positions dans lesquelles l'arbre primaire 3, relié au moteur thermique, est couplé directement à l'arbre secondaire 5 (***Ice2*** et ***Ice4***)***.***

Le dispositif de couplage 21 de l'arbre secondaire peut occuper:
- une position dans laquelle l'arbre primaire 4, relié à la machine électrique 8, est découplé de l'arbre secondaire 5 (***Neutre Ev***)*,* et
- deux positions dans lesquelles l'arbre primaire 4 relié à la machine électrique 7, est couplé directement à l'arbre secondaire 5 (***EvA*** et ***EvB***)***.***

Le dispositif de couplage 21 de l'arbre de transfert peut occuper trois positions dans lesquelles :
- l'arbre de transfert 6 est découplé de l'arbre secondaire 5 (***Neutre Ice, Ic2, Ic4***)***,***
- l'arbre de transfert assure le transfert du mouvement du moteur thermique sur l'arbre secondaire 5 ***(Ice3),*** et
- l'arbre de transfert assure le couplage des deux arbres primaires 3, 4 (***couplage***)*.*

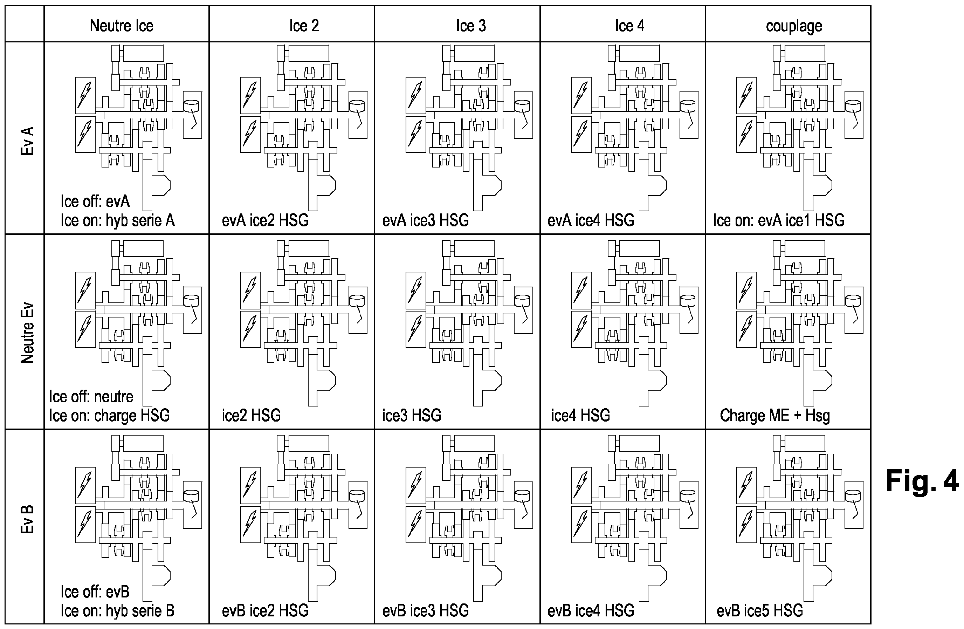

La figure 4, correspondant au deuxième mode de réalisation, se lit comme la figure 3, avec, en plus, l'apport de la deuxième machine électrique appelée HSG, pour *« High Voltage Start Generator ».* Les trois rapports thermiques ***Ice2, Ice3, Ice4*** sont accessibles dans un mode de fonctionnement hybride parallèle, avec la deuxième machine électrique 29 seule, ou avec les deux machines électriques 8, 29, couplés sur l'un des deux rapports électriques A, B.

Conformément aux figures 3 et 4, le fonctionnement de la transmission peut être limité à cinq des 3 X 3 combinaisons de position des dispositifs de couplage 22, 23 de l'arbre primaire et de l'arbre de transfert. Les combinaisons retenues sont utilisées respectivement pour les rapports ***Ice2*** et ***Ice4*** et pour le rapport ***Ice3*** et le ***couplage.*** Pour éviter un blocage de la transmission occasionné par l'engagement intempestif de deux rapports thermiques, on peut commander ces deux dispositifs par un système de sélection / passage classique de boîte manuelle, où l'on sélectionne une ligne de passage avant d'engager un rapport sur celle-ci : pour engager l'ensemble des rapports illustrés par la matrice à 15 positions de la figure 3, et opérer tous les changements de rapports nécessaires au bon fonctionnement de la transmission, les trois dispositifs de couplage 22, 21, 23 sont avantageusement commandés par un groupe de passage électrique à trois positions, et un groupe fonctionnel de passage thermique à cinq positions.

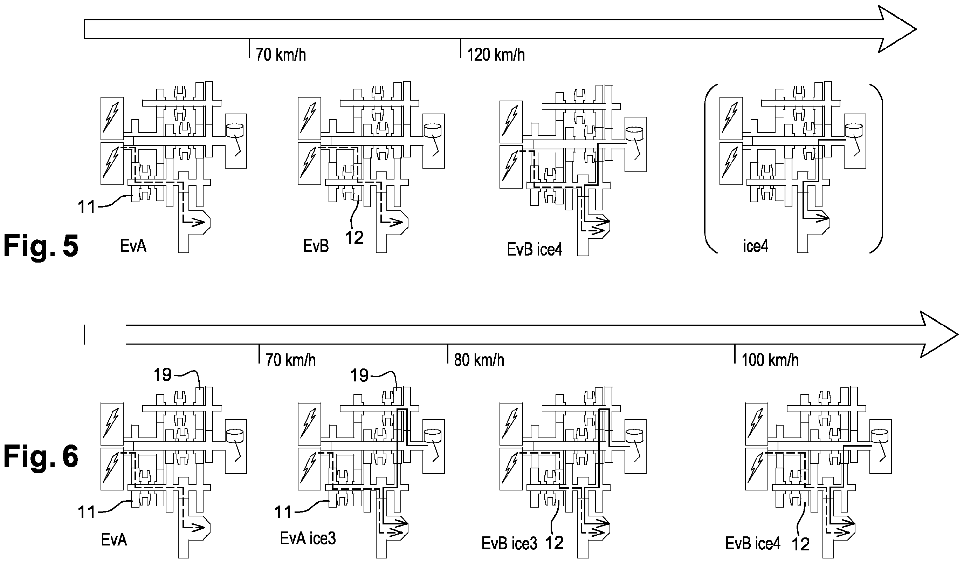

La figure 5 illustre une séquence d'accélération minimisant le roulage électrique, convenant notamment pour un mode d'utilisation dit « de *semaine* », avec la possibilité de recharger les batteries entre plusieurs trajets. Le véhicule est lancé sur le rapport électrique ***EvA***. Le passage sur le rapport électrique EvB, effectué par exemple autour de 70 km/h, se fait en rupture de couple avec la séquence suivante : annulation du couple électrique, décrabotage, du pignon fou 11 de **EvA,** synchronisation de la machine électrique à vide pour que le pignon fou 12 de *EvB* atteigne la vitesse du secondaire 5, puis crabotage du rapport B e remise en couple. On peut passer ensuite le rapport ***EvB Ic4*** : la traction est maintenue par le moteur électrique sur le rapport **EvB,** le moteur thermique est démarré (à l'aide d'un dispositif de démarrage propre), puis synchronisé à vide jusqu'au régime du pignon fou 14 du rapport ***Ic4*,** le moteur thermique *Ice* est craboté, puis le niveau de couple entre celui-ci et la machine électrique 8, est ajusté. Pour optimiser la consommation et éviter les pertes d'entraînement de la machine électrique, la machine électrique peut être déconnectée et arrêtée. Elle peut toutefois être reconnectée pour faire de la régénération ou ajouter du couple (« boost ») en accélération.

La figure 6 est une séquence avec roulage électrique, mais sans rupture de couple, dans mode d'utilisation dit *« mode semaine confort ».* Le véhicule est lancé sur le rapport électrique EvA, par jusqu'à environ 70 km/h. le moteur thermique est démarré, puis lancé à vide jusqu'au régime du pignon fou 19 du rapport ***Ic3.*** Le moteur thermique est craboté, puis le niveau de couple entre celui-ci et la machine électrique 8 est ajusté. On effectue ensuite un passage du rapport ***EvA Ice3*** sur le rapport ***EvB Ice3,*** par exemple autour de 80 km/h, en annulant le couple électrique avant de dé-craboter le pignon 11, de synchroniser à vide la machine électrique pour qu'elle atteigne le régime du rapport ***EvB,*** et de craboter le pignon 12. A partir de 100 km/h, on peut faire un passage de ***EvB Ice3*** sur **EvB *Ice4*** en maintenant la traction électrique sur le rapport ***EvB.*** Le couple du moteur thermique est annulé, puis reporté sur ***EvB ;*** le moteur thermique est freiné et décélère (avec ou sans dispositifs complémentaires de frottement). Quand le régime du pignon fou 12 de ***Ice4*** est atteint, le moteur thermique *Ice* est craboté. Le couple est de nouveau réparti entre le moteur thermique et la machine électrique 8.

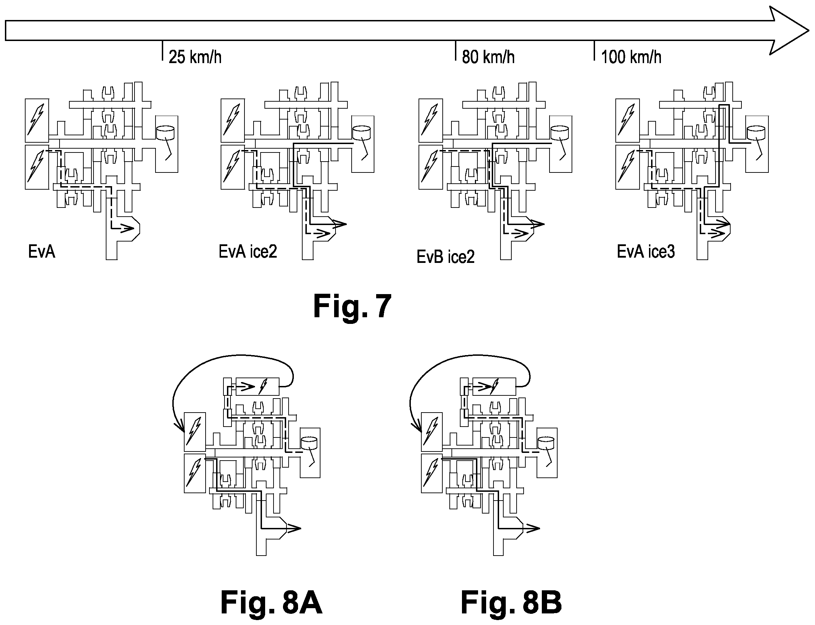

La figure 7 donne un exemple de séquence pour une forte demande d'accélération, avec l'appui éventuel de la deuxième machine électrique 29. Le véhicule est toujours lancé sur le rapport électrique ***EvA*.** A environ 25 km/h, le moteur thermique est lancé sur le rapport ***Ice2.*** Vers 82 km/h, on peut basculer la machine électrique du rapport EvA sur le rapport ***EvB,*** puis passer sur le rapport ***EvB Ic3,** à* environ 100 km/h. Dans cet enchaînement, de type « pied à fond », les couples électrique et thermique ne transitent pas par le même pignon de la ligne primaire. Il est possible de transmettre à la roue la totalité des couples électrique et thermique, sans limitation.

La présence d'une deuxième machine électrique permet d'ajouter à la transmission un grand nombre de fonctionnalités. Le démarrage du moteur thermique peut être plus silencieux et plus rapide, sans bruit de démarreur. La rapidité du démarrage est essentielle pour l'agrément de la conduite, notamment pour disposer d'un surcroit de puissance lors des dépassements. Cette rapidité permet également de le déconnecter dès qu'il n'est plus utile à la traction. On peut donc gagner sur la consommation, notamment par suppression du frein moteur en décélération en maximisant la puissance de régénération de la machine électrique. On peut encore assurer le maintien de faibles charges avec la machine électrique seule, sans frein moteur, dans une fonction dite de « *sailing* »*.*

La deuxième machine électrique 29 permet également d'améliorer les changements de rapport grâce à leur synchronisation électrique, dite « e-synchronisation ». Comme le pilotage en couple d'une machine électrique est plus rapide et plus précis que celui d'un moteur thermique, l'ajout d'une seconde machine électrique en prise directe, permet un pilotage plus fin du moteur thermique à vide lors des passages. Concrètement, on réduit les temps de passage et les chocs de crabotage. En particulier il est possible de récupérer l'énergie cinétique emmagasinée par le volant d'inertie du moteur thermique, lors des passages d'un rapport court sur un rapport plus long, où il faut décélérer le moteur thermique.

Comme indiqué plus haut, la transmission dispose avec ses deux machines électriques, de modes hybrides séries. Ils sont particulièrement bien adaptés en consommation et en agrément, aux faibles charges et aux faibles vitesses, par exemple en usage urbain ou en embouteillage. Ces modes présentent également un intérêt, pour réchauffer le catalyseur à un niveau de charge optimum et indépendant de la traction. On peut ainsi réduire les émissions, tout en stockant dans la batterie, l'énergie produite.

Enfin, l'ajout de la deuxième machine électrique 29 permet de réaliser sous couple, les changements de rapports électriques (de ***EvA*** à ***EvB*** et inversement), sans faire démarrer le moteur thermique (sans combustion, donc en mode électrique), mais en l'entraînant à vide. Les changements de rapports électriques A, B et B, A s'effectuent sous couple, en faisant tourner le moteur thermique sans lui injecter de carburant. L'enchaînement de la figure 9 à partir du premier rapport A, établi par la première machine électrique 8 (étape 1), est le suivant :
a) synchronisation de la deuxième machine électrique 29 au régime du pignon fou 12 du deuxième rapport électrique ***EvB,*** par l'intermédiaire du moteur thermique, sans injection de carburant, et crabotage de la deuxième machine électrique 29 (étape 2),
b) fourniture de couple par la deuxième machine électrique 29, et dé-crabotage du rapport ***EvA*** (étape 3),
c) synchronisation de la première machine électrique 8 et fourniture de couple par celle-ci sur le deuxième rapport ***EvB*** (étape 4),
d) déconnection de la deuxième machine électrique 29.

Le couple est transféré temporairement d'une machine sur l'autre entre les étapes 2 et 4. Le niveau de puissance de compensation de la deuxième machine électrique est déduit de la trainée d'entraînement à vide du moteur thermique. Le passage rétro de ***EvA*** sur ***EvB*** en pied à fond (« kick down ») ou en pied levé, s'effectue sous couple dans les mêmes conditions, avec maintien du frein moteur dans ce dernier cas.

La figure 10 illustre un perfectionnement du deuxième mode de réalisation décrit, permettant de découpler la seconde machine électrique 29 du moteur thermique *Ice.* Grâce au dispositif de couplage additionnel 30, porté par l'axe de la deuxième machine électrique 29, on s'affranchit des pertes d'entraînement mécaniques ou électromagnétiques dans celle-ci. Cette disposition permet de réduire la consommation. Elle, trouve tout son intérêt, lors d'un roulage prolongé sur autoroute. Le dispositif 30 peut être de tout type, par exemple un crabot actionné par un électroaimant, intégré ou non à la machine 30.

Les figures 11A et 11B illustrent un autre perfectionnement du deuxième mode de réalisation, permettant également de désaccoupler la seconde machine électrique du moteur thermique. Le dispositif de couplage additionnel 30 est placé en extrémité de l'arbre de transfert 6, à l'extérieur de son pignon fixe de couplage 18. On s'affranchit des pertes d'entraînement dans la seconde machine 29 et sur l'arbre de transfert 6 (notamment sur autoroute) pour réduire la consommation, ou cumuler sa puissance à celle de la première machine électrique sur les rapports électriques ***Eva*** ou ***EvB.*** La deuxième machine 29 peut également intervenir pour augmenter le niveau de compensation électrique, lors des passages sous couple entre les deux rapports électriques ***EvA*** et ***EvB.***

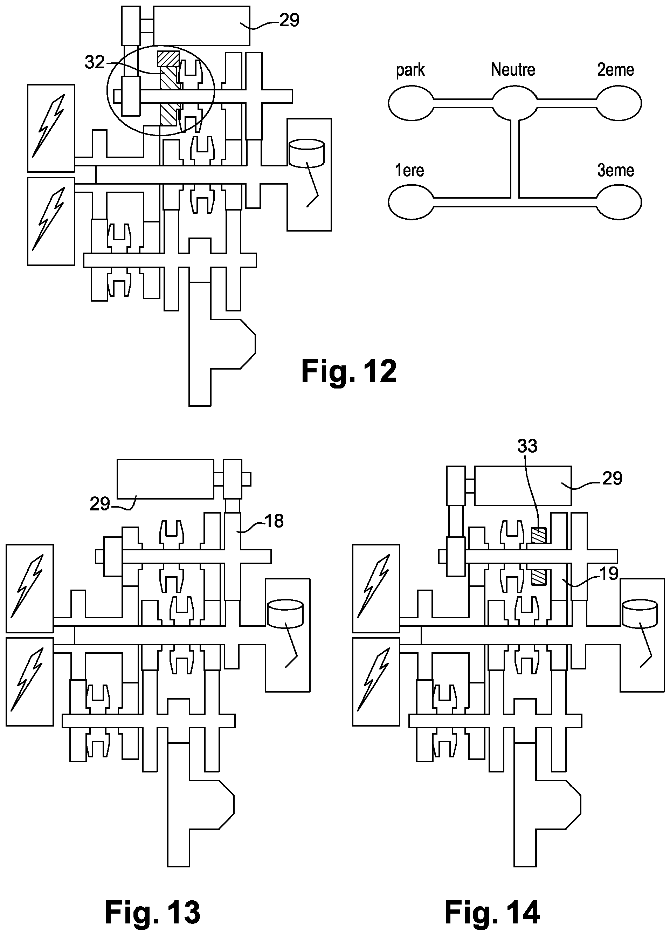

Comme indiqué sur la figure 12, on peut adapter sur le dispositif de couplage des arbres primaires 23, une rondelle crabot 32 fixe autour de l'arbre de transfert 6, pour réaliser la fonction de parking. La rondelle crabot 32 coopère avec son dispositif de couplage 23, pour réaliser la fonction de frein de parking. Les cinq positions de la fonction passage / sélection associée au moteur thermique, deviennent alors neutre, park, 1^{ère}, 2^{ème}, 3^{ème}.

La figure 13 montre une implantation originale de la roue de parking sur la transmission. La proximité de l'arbre de transfert rendant difficile l'implantation habituelle de la fonction parking sur l'arbre secondaire, on place la roue de parking 33 sur le pignon fou de troisième 19 de l'arbre de transfert 6, qui est directement lié aux roues, tout en étant suffisamment accessible pour implanter un actionneur de roue de parking.

Enfin, la figure 14 montre encore une autre variante du deuxième mode de réalisation, dans laquelle la deuxième machine électrique 29 entraîne le pignon de couplage 18 de l'arbre de transfert 6.

Les avantages et les possibilités d'utilisation de la transmission hybride proposée par l'invention sont nombreux. Sa longueur est réduite par rapport aux transmissions hybrides connues. Elle est déterminée par l'alignement de seulement cinq dentures et deux groupes crabots autorisant une réduction d'environ 15 mm grâce à la suppression d'un pignon d'attaque de différentiel sur la ligne secondaire.

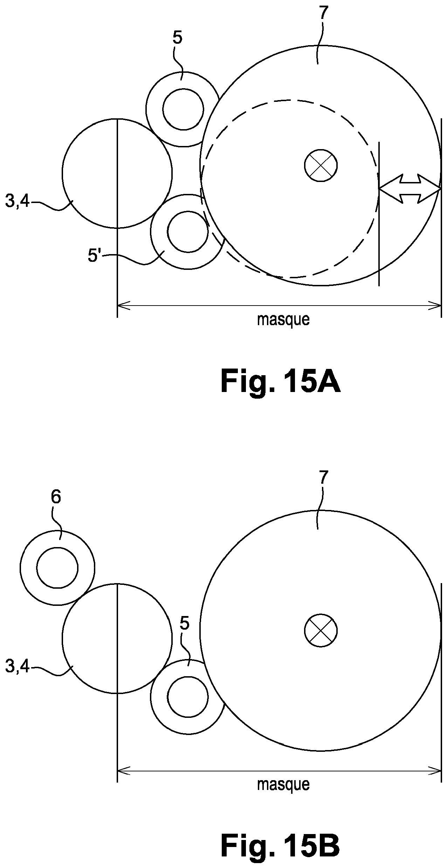

Comme indiqué plus haut, la présence d'un seul pignon d'attaque permet de diminuer le masque de la transmission, qui s'intègre ainsi plus facilement dans des petits véhicules. Les figures 15A et 15B mettent en évidence la réduction du masque par rapport à une transmission hybride connue (figure 15A) comportant deux arbres secondaires 5, 5' qui attaquent tous les deux le différentiel 7. Avec deux arbres secondaires et deux pignons d'attaque (figure 15A), la position de ces derniers est déterminée par la proximité relative des deux arbres secondaires. Elle impose l'utilisation d'une grande couronne pour pouvoir à la fois engrener sur les pignons d'attaque et réaliser une démultiplication courte. Ces contraintes posent des problèmes d'implantation de la transmission dans le compartiment moteur, pour la sécurité des occupants en cas de crash et le positionnement de la couronne de direction notamment sur des petits véhicules. Conformément à l'invention (figure 15B), la transmission n'a qu'un seul arbre secondaire, 5 et le mouvement transitant par l'arbre de transfert 6, est transmis au différentiel par l'intermédiaire de l'arbre secondaire unique 5. Cette architecture permet de positionner une couronne de différentiel plus petite. Son masque est réduit. Elle s'intègre donc beaucoup plus facilement dans les petits véhicules.

Enfin, l'indépendance des changements de rapports en mode électrique et en mode thermique procure une grande flexibilité d'utilisation des rapports électriques et thermiques, si bien qu'on dispose toujours du meilleur compromis entre la demande en couple du conducteur, l'acoustique, et la consommation du véhicule.

## Revendications

1. Transmission hybride pour véhicule automobile muni d'un moteur thermique et d'une machine électrique d'entraînement (8), comprenant un arbre primaire plein (3) et un arbre primaire creux (4) concentriques, reliés au vilebrequin (1) du moteur thermique et à la machine électrique (8) sans embrayage de coupure, un arbre secondaire (5) relié aux roues du véhicule par un différentiel (7), l'arbre secondaire (5) portant un pignon d'attaque de différentiel (24) pour assurer la descente du mouvement sur le différentiel (7) en direction des roues du véhicule, et un arbre de transfert (6) de mouvement d'un arbre primaire (3) sur l'arbre secondaire (5) et de couplage des arbres primaires (3, 4), **caractérisée en ce que**
- la machine électrique (8) est disposée à l'extrémité opposée de la ligne primaire (3, 4) par rapport au moteur thermique, et
- un premier arbre primaire (3) porte une denture fixe (17), assurant le passage permanent du mouvement sur l'arbre de transfert (6), et deux pignons fous (15, 16) de rapports thermiques ou hybrides engrenant avec des dentures fixes (13, 14) de l'arbre secondaire (5).

2. Transmission hybride selon la revendication 1, **caractérisée en ce qu'**elle dispose d'un seul pignon d'attaque de différentiel (24), porté par l'arbre secondaire (5) .

3. Transmission hybride selon la revendication 1 ou 2, **caractérisée en ce qu'**un deuxième arbre primaire (4) porte deux dentures fixes (9, 10) de rapports électriques, engrenant avec deux pignons fous (11, 12) de l'arbre secondaire (5).

4. Transmission hybride selon la revendication 3, **caractérisée en ce que** l'arbre de transfert (6) porte une denture fixe (18) engrenant avec la denture fixe (17) du premier arbre primaire (3) et deux pignons fous (19, 20), engrenant respectivement avec un des pignons fou (16) du premier arbre primaire (3) et une denture fixe (10) du deuxième arbre primaire (4).

5. Transmission hybride selon l'une des revendications précédentes, **caractérisée en ce qu'**elle présente un engrenage triple (16, 19, 14) entre un des pignons fous (19) de l'arbre de transfert (6), un des pignons fou (16) d'un arbre primaire (3), et une denture fixe (14) de l'arbre secondaire (5).

6. Transmission hybride selon l'une des revendications précédente, **caractérisée en ce qu'**elle présente un dispositif de couplage (22) sur l'arbre primaire plein(3) pouvant occuper :
- une position dans laquelle l'arbre primaire (3) relié au moteur thermique est découplé de la chaîne cinématique reliant la machine électrique (8) aux roues, ou couplé à celle-ci par l'arbre transfert (6), ou couplé à la machine électrique (8), et
- deux positions dans lesquelles l'arbre primaire (3) relié au moteur thermique est couplé directement à l'arbre secondaire (5).

7. Transmission hybride selon l'une des revendications 3 à 6, **caractérisée en ce qu'**elle présente un dispositif de couplage (21) sur l'arbre secondaire (5) pouvant occuper :
- une position dans laquelle l'arbre primaire (4) relié à la machine électrique (8) est découplé de l'arbre secondaire (5), et
- deux positions dans lesquelles l'arbre primaire (4) relié à la machine électrique (7) est couplé directement à l'arbre secondaire (5).

8. Transmission hybride selon l'une des revendications 3 à 6, **caractérisée en ce qu'**elle présente un dispositif de couplage (23) sur l'arbre de transfert (6) pouvant occuper trois positions dans lesquelles :
- l'arbre de transfert (6) est découplé de l'arbre secondaire (5),
- l'arbre de transfert (6) assure le transfert du mouvement du moteur thermique sur l'arbre secondaire (5), et
- l'arbre de transfert assure le couplage des deux arbres primaires (3, 4).

9. Transmission hybride selon l'une des revendications précédentes, **caractérisée en ce qu'**elle comprend une deuxième machine électrique (29), couplée à l'arbre de transfert (6).

10. Transmission hybride selon la revendication 9, **caractérisée en ce qu'**elle comporte un dispositif de couplage supplémentaire (30) permettant de connecter ou de déconnecter la deuxième machine électrique (29) de la transmission.

11. Transmission hybride selon la revendication 9 ou 10, **caractérisée en ce que** la deuxième machine électrique (29) est couplée à l'arbre de transfert (6) par un pignon d'attaque (28), entraînant par un pignon (26) fixé sur un arbre de renvoi 27, un pignon fixe d'entrée (25) sur l'arbre de transfert (6).

12. Transmission selon la revendication 10, **caractérisée en ce que** le dispositif de couplage supplémentaire (30) est porté par l'axe de la deuxième machine électrique (29).

13. Transmission hybride selon la revendication 10, **caractérisée en ce que** le dispositif de couplage supplémentaire (30) est placé en extrémité de l'arbre de transfert (6).

14. Transmission hybride selon la revendication 8, **caractérisée en ce que** l'arbre de transfert (6) porte une rondelle crabot (32) fixe autour de l'arbre de transfert 6, coopérant avec son dispositif de couplage (23), pour réaliser la fonction de frein de parking.

15. Transmission hybride selon la revendication 9, **caractérisée en ce qu'**elle comporte une roue de parking (33) montée sur un des pignons fous de l'arbre de transfert (6).

16. Transmission hybride selon les revendications 4 et 9, **caractérisée en ce que** la deuxième machine électrique (29) entraîne la denture fixe de couplage (18) de l'arbre de transfert (6).

17. Procédé de commande de changements de rapports sur une transmission hybride à l'aide d'un dispositif de couplage (22) à trois positions de l'arbre primaire plein(3), d'un dispositif de couplage à trois positions (21) de l'arbre secondaire (5), et d'un dispositif de couplage à trois positions (23) de l'arbre de transfert (6), agencés conformément à une transmission hybride selon les revendications 7 à 9, procédé dans lequel les trois dispositifs de couplage (22, 21, 23) sont commandés par un groupe de passage électrique à trois positions, et par un groupe fonctionnel de passage thermique à cinq positions.

18. Procédé de commande de changements de rapports selon la revendication 17, **caractérisé en ce que** trois rapports thermiques (*Ice2, Ice3, Ice4*) sont accessibles dans un mode de fonctionnement hybride parallèle, avec la deuxième machine électrique (29) seule, ou avec les deux machines électriques (8, 29), couplés sur l'un des deux rapports électriques (A, B) de la transmission.

19. Procédé de commande de changements de rapports selon la revendication 17 ou 18, **caractérisé en ce qu'**on réalise sous couple les changements de rapports électriques (A, B) et (B, A) en faisant tourner le moteur thermique sans lui injecter de carburant.

20. Procédé de commande de changements de rapports selon la revendication 17, ou 18, **caractérisé en ce que** le changement de rapport électrique (A, B) s'effectue de la façon suivante :
a) synchronisation de la deuxième machine électrique 29 au régime du pignon fou (12) du deuxième rapport électrique (B), par l'intermédiaire du moteur thermique sans injection de carburant, et crabotage de la deuxième machine électrique (29),
b) fourniture de couple par la deuxième machine électrique (29) et décrabotage du rapport EvA,
c) synchronisation de la première machine électrique (8) et fourniture de couple par celle-ci sur le deuxième rapport (B), et
d) déconnection de la deuxième machine électrique (29) .

## Patentansprüche

1. Hybridgetriebe für ein Kraftfahrzeug, das über einen Verbrennungsmotor und eine elektrische Antriebsmaschine (8) verfügt, beinhaltend eine primäre Vollwelle (3) und eine primäre Hohlwelle (4), die konzentrisch sind und ohne Trennkupplung mit der Kurbelwelle (1) des Verbrennungsmotors und mit der elektrischen Maschine (8) verbunden sind, eine sekundäre Welle (5), die über ein Differential (7) mit den Rädern des Fahrzeugs verbunden ist, wobei die sekundäre Welle (5) ein Differential-Antriebsritzel (24) trägt, um die Weitergabe der Bewegung an das Differential (7) in Richtung der Räder des Fahrzeugs sicherzustellen, und eine Welle zum Übertragen (6) von Bewegungen von einer primären Welle (3) auf die sekundäre Welle (5) und zum Koppeln der primären Wellen (3, 4), **dadurch gekennzeichnet, dass**
- die elektrische Maschine (8) mit Bezug auf den Verbrennungsmotor an dem gegenüberliegenden Ende des Primärstrangs (3, 4) angeordnet ist und
- eine erste primäre Welle (3) eine Festverzahnung (17), die den permanenten Übergang der Bewegung auf die Übertragungswelle (6) sicherstellt, und zwei Losräder (15, 16) für Verbrenner- oder Hybridgänge trägt, die mit Festverzahnungen (13, 14) der sekundären Welle (5) im Eingriff sind.

2. Hybridgetriebe nach Anspruch 1, **dadurch gekennzeichnet, dass** es über ein einziges Differential-Antriebsritzel (24) verfügt, das von der sekundären Welle (5) getragen wird.

3. Hybridgetriebe nach Anspruch 1 oder 2, **dadurch gekennzeichnet, dass** eine zweite primäre Welle (4) zwei Festverzahnungen (9, 10) für Elektrogänge trägt, die mit zwei Losrädern (11, 12) der sekundären Welle (5) im Eingriff sind.

4. Hybridgetriebe nach Anspruch 3, **dadurch gekennzeichnet, dass** die Übertragungswelle (6) eine Festverzahnung (18), die mit der Festverzahnung (17) der ersten primären Welle (3) im Eingriff ist, und zwei Losräder (19, 20) trägt, die jeweils mit einem der Losräder (16) der ersten primären Welle (3) und einer Festverzahnung (10) der zweiten primären Welle (4) im Eingriff sind.

5. Hybridgetriebe nach einem der vorhergehenden Ansprüche, **dadurch gekennzeichnet, dass** es eine Dreifachverzahnung (16, 19, 14) zwischen einem der Losräder (19) der Übertragungswelle (6), einem der Losräder (16) einer primären Welle (3) und einer Festverzahnung (14) der sekundären Welle (5) aufweist.

6. Hybridgetriebe nach einem der vorhergehenden Ansprüche, **dadurch gekennzeichnet, dass** es eine Kopplungsvorrichtung (22) an der primären Vollwelle (3) aufweist, die Folgendes einnehmen kann:
- eine Position, in der die primäre Welle (3), die mit dem Verbrennungsmotor verbunden ist, von der kinematischen Kette, die die elektrische Maschine (8) mit den Rädern verbindet, entkoppelt ist, oder mit dieser über die Übertragungswelle (6) gekoppelt ist, oder mit der elektrischen Maschine (8) gekoppelt ist, und
- zwei Positionen, in denen die primäre Welle (3), die mit dem Verbrennungsmotor verbunden ist, direkt mit der sekundären Welle (5) gekoppelt ist.

7. Hybridgetriebe nach einem der Ansprüche 3 bis 6, **dadurch gekennzeichnet, dass** es eine Kopplungsvorrichtung (21) an der sekundären Welle (5) aufweist, die Folgendes einnehmen kann:
- eine Position, in der die primäre Welle (4), die mit der elektrischen Maschine (8) verbunden ist, von der sekundären Welle (5) entkoppelt ist, und
- zwei Positionen, in denen die primäre Welle (4), die mit der elektrischen Maschine (8) verbunden ist, direkt mit der sekundären Welle (5) gekoppelt ist.

8. Hybridgetriebe nach einem der Ansprüche 3 bis 6, **dadurch gekennzeichnet, dass** es eine Kopplungsvorrichtung (23) an der Übertragungswelle (6) aufweist, die drei Positionen einnehmen kann, in denen:
- die Übertragungswelle (6) von der sekundären Welle (5) entkoppelt ist,
- die Übertragungswelle (6) die Übertragung der Bewegung des Verbrennungsmotors auf die sekundäre Welle (5) sicherstellt und
- die Übertragungswelle die Kopplung der zwei primären Wellen (3, 4) sicherstellt.

9. Hybridgetriebe nach einem der vorhergehenden Ansprüche, **dadurch gekennzeichnet, dass** es eine zweite elektrische Maschine (29) beinhaltet, die mit der Übertragungswelle (6) gekoppelt ist.

10. Hybridgetriebe nach Anspruch 9, **dadurch gekennzeichnet, dass** es eine zusätzliche Kopplungsvorrichtung (30) umfasst, die es gestattet, die zweite elektrische Maschine (29) mit dem Getriebe zu verbinden oder von diesem zu trennen.

11. Hybridgetriebe nach Anspruch 9 oder 10, **dadurch gekennzeichnet, dass** die zweite elektrische Maschine (29) mit der Übertragungswelle (6) über ein Antriebsritzel (28) gekoppelt ist, das über ein Ritzel (26), das an einer Vorgelegewelle 27 befestigt ist, ein festes Eingangsritzel (25) an der Übertragungswelle (6) antreibt.

12. Getriebe nach Anspruch 10, **dadurch gekennzeichnet, dass** die zusätzliche Kopplungsvorrichtung (30) von der Achse der zweiten elektrischen Maschine (29) getragen wird.

13. Hybridgetriebe nach Anspruch 10, **dadurch gekennzeichnet, dass** die zusätzliche Kopplungsvorrichtung (30) am Ende der Übertragungswelle (6) angeordnet ist.

14. Hybridgetriebe nach Anspruch 8, **dadurch gekennzeichnet, dass** die Übertragungswelle (6) eine feste Klauenkupplung (32) um die Übertragungswelle 6 trägt, die mit ihrer Kopplungsvorrichtung (23) zusammenwirkt, um die Feststellbremsenfunktion bereitzustellen.

15. Hybridgetriebe nach Anspruch 9, **dadurch gekennzeichnet, dass** es ein Feststellrad (33) umfasst, das an einem der Losräder der Übertragungswelle (6) montiert ist.

16. Hybridgetriebe nach den Ansprüchen 4 und 9, **dadurch gekennzeichnet, dass** die zweite elektrische Maschine (29) die Kopplungsfestverzahnung (18) der Übertragungswelle (6) antreibt.

17. Verfahren zur Gangschaltungssteuerung bei einem Hybridgetriebe mit Hilfe einer Kopplungsvorrichtung (22) mit drei Positionen der primären Vollwelle (3), einer Kopplungsvorrichtung mit drei Positionen (21) der sekundären Welle (5) und einer Kopplungsvorrichtung mit drei Positionen (23) der Übertragungswelle (6), die gemäß einem Hybridgetriebe nach den Ansprüchen 7 bis 9 angeordnet sind, wobei bei dem Verfahren die drei Kopplungsvorrichtungen (22, 21, 23) durch eine Elektrowechselgruppe mit drei Positionen und durch eine Verbrennerwechselfunktionsgruppe mit fünf Positionen gesteuert werden.

18. Verfahren zur Gangschaltungssteuerung nach Anspruch 17, **dadurch gekennzeichnet, dass** drei Verbrennergänge (*Ice2, Ice3, Ice4*) in einem Parallelhybridbetriebsmodus verfügbar sind, wobei nur die zweite elektrische Maschine (29) oder beide elektrischen Maschinen (8, 29) mit einem der zwei Elektrogänge (A, B) des Getriebes gekoppelt sind.

19. Verfahren zur Gangschaltungssteuerung nach Anspruch 17 oder 18, **dadurch gekennzeichnet, dass** die Schaltungen von Elektrogängen (A, B) und (B, A) unter Last dadurch erfolgen, dass der Verbrennungsmotor drehen gelassen wird, ohne ihm Kraftstoff einzuspritzen.

20. Verfahren zur Gangschaltungssteuerung nach Anspruch 17 oder 18, **dadurch gekennzeichnet, dass** die Schaltung eines Elektroganges (A, B) auf die folgende Weise erfolgt:
a) Synchronisieren der zweiten elektrischen Maschine (29) mit dem Betriebszustand des Losrades (12) des zweiten Elektroganges (B) mit Hilfe des Verbrennungsmotors ohne Einspritzung von Kraftstoff und Einrücken der zweiten elektrischen Maschine (29),
b) Bereitstellen eines Drehmoments durch die zweite elektrische Maschine (29) und Ausrücken des EvA-Ganges,
c) Synchronisieren der ersten elektrischen Maschine (8) und Bereitstellen eines Drehmoments durch diese in dem zweiten Gang (B) und
d) Trennen der zweiten elektrischen Maschine (29).

## Claims

1. Hybrid transmission for a motor vehicle provided with an internal combustion engine and an electric machine (8) for drive, comprising a solid primary shaft (3) and a hollow primary shaft (4) which are concentric and connected to the crankshaft (1) of the internal combustion engine and to the electric machine (8) without a disconnect clutch, a secondary shaft (5) connected to the wheels of the vehicle by a differential (7), the secondary shaft (5) carrying a differential input pinion (24) to ensure the transfer of motion to the differential (7) in the direction of the wheels of the vehicle, and a shaft (6) for transferring motion from a primary shaft (3) to the secondary shaft (5) and for coupling the primary shafts (3, 4), **characterized in that**
- the electric machine (8) is arranged at the opposite end of the primary line (3, 4) relative to the internal combustion engine, and
- a first primary shaft (3) carries a fixed gearwheel (17) ensuring the permanent transfer of motion to the transfer shaft (6), and two idler pinions (15, 16) of the hybrid or combustion engine gears, engaging with fixed gearwheels (13, 14) of the secondary shaft (5).

2. Hybrid transmission according to Claim 1, **characterized in that** it has a single differential input pinion (24) carried by the secondary shaft (5).

3. Hybrid transmission according to Claim 1 or 2, **characterized in that** a second primary shaft (4) carries two fixed gearwheels (9, 10) of the electric motor gears, engaging with two idler pinions (11, 12) of the secondary shaft (5).

4. Hybrid transmission according to Claim 3, **characterized in that** the transfer shaft (6) carries a fixed gearwheel (18) engaging with the fixed gearwheel (17) of the first primary shaft (3), and two idler pinions (19, 20) engaging respectively with one of the idler pinions (16) of the first primary shaft (3) and a fixed gearwheel (10) of the second primary shaft (4).

5. Hybrid transmission according to any of the preceding claims, **characterized in that** it has a triple gearing (16, 19, 14) between one of the idler pinions (19) of the transfer shaft (6), one of the idler pinions (16) of a primary shaft (3), and a fixed gearwheel (14) of the secondary shaft (5).

6. Hybrid transmission according to any of the preceding claims, **characterized in that** it has a coupling device (22) on the solid primary shaft (3) which is able to occupy:
- a position in which the primary shaft (3) connected to the internal combustion engine is decoupled from the drive train connecting the electric machine (8) to the wheels, or coupled thereto by the transfer shaft (6), or coupled to the electric machine (8), and
- two positions in which the primary shaft (3) connected to the internal combustion engine is coupled directly to the secondary shaft (5).

7. Hybrid transmission according to any of Claims 3 to 6, **characterized in that** it has a coupling device (21) on the secondary shaft (5) which is able to occupy:
- a position in which the primary shaft (4) connected to the electric machine (8) is decoupled from the secondary shaft (5), and
- two positions in which the primary shaft (4) connected to the electric machine (7) is coupled directly to the secondary shaft (5).

8. Hybrid transmission according to any of Claims 3 to 6, **characterized in that** it has a coupling device (23) on the transfer shaft (6) which is able to occupy three positions in which:
- the transfer shaft (6) is decoupled from the secondary shaft (5),
- the transfer shaft (6) ensures the transfer of motion from the internal combustion engine to the secondary shaft (5), and
- the transfer shaft ensures the coupling of the two primary shafts (3, 4).

9. Hybrid transmission according to any of the preceding claims, **characterized in that** it comprises a second electric machine (29) coupled to the transfer shaft (6).

10. Hybrid transmission according to Claim 9, **characterized in that** it comprises an additional coupling device (30) allowing the second electric machine (29) to be connected to or disconnected from the transmission.

11. Hybrid transmission according to Claim 9 or 10, **characterized in that** the second electric machine (29) is coupled to the transfer shaft (6) by an input pinion (28) which, via a pinion (26) fixed to a layshaft (27), drives a fixed input pinion (25) on the transfer shaft (6) .

12. Transmission according to Claim 10, **characterized in that** the additional coupling device (30) is carried by the spindle of the second electric machine (29).

13. Hybrid transmission according to Claim 10, **characterized in that** the additional coupling device (30) is placed at the end of the transfer shaft (6).

14. Hybrid transmission according to Claim 8, **characterized in that** the transfer shaft (6) carries a fixed claw ring (32) around the transfer shaft (6), cooperating with its coupling device (23) to perform the function of a parking brake.

15. Hybrid transmission according to Claim 9, **characterized in that** it comprises a parking gear (33) mounted on one of the idler pinions of the transfer shaft (6) .

16. Hybrid transmission according to Claims 4 and 9, **characterized in that** the second electric machine (29) drives the fixed coupling gearwheel (18) of the transfer shaft (6).

17. Method for controlling gear changes on a hybrid transmission using a three-position coupling device (22) of the solid primary shaft (3), a three-position coupling device (21) of the secondary shaft (5), and a three-position coupling device (23) of the transfer shaft (6), arranged in accordance with a hybrid transmission according to Claims 7 to 9, in which method the three coupling devices (22, 21, 23) are controlled by a three-position electric gear shift group, and by a fiveposition combustion engine gear shift functional group.

18. Method for controlling gear changes according to Claim 17, **characterized in that** three combustion engine gears (*Ice2, Ice3, Ice4*) are accessible in a parallel hybrid function mode, with the second electric machine (29) only, or with the two electric machines (8, 29), coupled to one of the two electric gears (A, B) of the transmission.

19. Method for controlling gear changes according to Claim 17 or 18, **characterized in that** the changes of electric gears (A, B) and (B, A) take place under torque by causing the internal combustion engine to rotate without injecting fuel therein.

20. Method for controlling gear changes according to Claim 17 or 18, **characterized in that** the change of electric gear (A, B) takes place as follows:
a) synchronization of the second electric machine (29) to the speed of the idler pinion (12) of the second electric gear (B), via the internal combustion engine without injection of fuel, and engagement of the second electric machine (29),
b) supply of torque by the second electric machine (29) and disengagement of the gear EvA,
c) synchronization of the first electric machine (8) and supply of torque by this to the second gear (B), and
d) disconnection of the second electric machine (29) .
